# EUROPEAN PATENT SPECIFICATION

(11) **EP 2 740 915 B1**
(45) Date of publication and mention of the grant of the patent: **23.09.2015**
(21) Application number: 13165686.0
(22) Date of filing: 29.04.2013
(51) Int. Cl.: F02B 19/06, F02B 19/12

(54) **Spark ignition engine**
Ottomotor
Moteur à allumage par étincelle

(30) Priority: 07.12.2012 KR 20120142055
(43) Date of publication of application: 11.06.2014
(73) Proprietor: HYUNDAI MOTOR COMPANY, Seoul 137-938 (KR)
(72) Inventor: Lee, Won Jun, 402-022 Incheon (KR); Woo, Soo Hyung, 446-911 Gyeonggi-do (KR); Kong, Jin Kook, 443-747 Gyeonggi-do (KR)
(74) Representative: Viering, Jentschura & Partner Patent- und Rechtsanwälte

(56) References cited:
- WO-A1-00/31390
- WO-A1-99/07984
- US-A- 4 075 996

## Description

### CROSS-REFERENCE TO RELATED APPLICATION

This application is based on and claims benefit of priority to Korean Patent Application No.10-2012-0142055, filed on December 7, 2012 in the Korean Intellectual Property Office, the entire contents of which are hereby incorporated by reference.

### TECHNICAL FIELD

The present inventive concept relates, in general, to a spark ignition engine and, more particularly, to a spark ignition engine that propagates a flame ignited previously to a combustion chamber to burn a mixture.

### BACKGROUND

Internal combustion engines may be classified into spark ignition engines such as gasoline engines that are equipped with a spark plug and promote combustion of a mixture by a separate ignition spark, and compression ignition engines that promote combustion by spontaneous combustion of fuel injected into compressed air in a combustion chamber.

In spark ignition engines, the spark plug is mounted in the combustion chamber and directly provides a spark to the mixture supplied to the combustion chamber to cause ignition. A combustion process takes place such that the ignition occurs at one point in the combustion chamber, and thus a flame front is propagated to the entire combustion chamber. As such, the spark ignition engine has various combustion problems in that a possibility of misfire is relatively high, in that a long flame propagation time is required, and in that a knocking phenomenon is caused by spontaneous combustion of end gas prior to reaching the flame front.

The foregoing is intended merely to aid in the understanding of the background of the present inventive concept, and is not intended to mean that the present inventive concept falls within the purview of the related art that is already known to those skilled in the art.

### [Documents of Related Art]

(Patent Document 1) Korean Unexamined Patent Application Publication No. 10-2010-0036036
(Patent Document 2) US Patent No. 6402057
(Patent Document 3) WO 99 07984 A.

### SUMMARY

Accordingly, the present inventive concept has been made 2 keeping in mind the above problems occurring in the related art, and the present inventive concept provides a spark ignition engine that allows a mixture suctioned into a combustion chamber to be simultaneously ignited at many points by a plurality of flame nuclei, thereby sharply reducing a possibility of occurrence of misfire and knocking, and promoting more stable combustion.

An aspect of the present inventive concept relates to a spark ignition engine, which includes a main combustion chamber configured to suction a mixture through an intake port, a pre-chamber configured to communicate with the main combustion chamber, an auxiliary cylinder configured to communicate with the main combustion chamber via the pre-chamber, an auxiliary intake passage connecting the auxiliary cylinder and the intake port, an auxiliary piston configured to slidably reciprocate in the auxiliary cylinder such that the mixture is suctioned from the intake port via the auxiliary intake passage and the mixture is discharged to the main combustion chamber via the pre-chamber, and a spark plug configured to ignite the mixture in the pre-chamber.

Another aspect of the present inventive concept encompasses a method of controlling a spark ignition engine. The spark ignition engine includes a main combustion chamber configured to suction a mixture through an intake port, a pre-chamber provided configured to communicate with the main combustion chamber, an auxiliary cylinder configured to communicate with the main combustion chamber via the pre-chamber, an auxiliary intake passage connecting the auxiliary cylinder and the intake port, an auxiliary piston configured to slidably reciprocate in the auxiliary cylinder such that the mixture is suctioned from the intake port via the auxiliary intake passage and the mixture is discharged to the main combustion chamber via the pre-chamber, a spark plug configured to ignite the mixture in the pre-chamber, and at least one injector disposed in the intake port and configured to inject fuel to an upstream side of a portion where the auxiliary intake passage communicates with the intake port. The method includes injecting the fuel from the injector at a point of time when the fuel and air injected by the injector are suctioned to the auxiliary cylinder via the auxiliary intake passage while the auxiliary piston is raised in the auxiliary cylinder. A main piston of the main combustion chamber is lowered so as to perform an intake stroke in which the mixture of fuel and air injected from the injector is suctioned to the main combustion chamber. When the main piston of the main combustion chamber is raised to perform a compression stroke, the auxiliary piston of the auxiliary cylinder is lowered to move the mixture suctioned into the auxiliary cylinder to the pre-chamber. The spark plug is controlled so as to ignite the mixture moved to the pre-chamber. An ignited flame is caused to be formed into a plurality of flame nuclei and to be injected into the mixture compressed in the main combustion chamber.

According to the present inventive concept, the spark ignition engine may allow a mixture suctioned into a combustion chamber to be simultaneously ignited at many points by a plurality of flame nuclei, thereby sharply reducing a possibility of occurrence of misfire and knocking and promoting more stable combustion.

Further, the injector may be installed in the intake port. Thereby, the spark ignition engine may be configured in a simple structure at an inexpensive cost compared to a direct injection engine in which an injector is installed in a combustion chamber. Further, the spark ignition engine may be improved in durability and operational stability of related components such as an auxiliary cylinder and an auxiliary piston.

### BRIEF DESCRIPTION OF THE DRAWINGS

The foregoing and other features of the inventive concept will be apparent from more particular description of embodiments of the inventive concept, as illustrated in the accompanying drawings in which like reference characters may refer to the same or similar parts throughout the different views. The drawings are not necessarily to scale, emphasis instead being placed upon illustrating the principles of the embodiments of the inventive concept.
FIG. 1 shows a configuration of a spark ignition engine according to an embodiment of the present inventive concept.
FIG. 2 shows an example of a method of controlling a spark ignition engine according to an embodiment of the present inventive concept.

### DETAILED DESCRIPTION

Examples of the present inventive concept will be described below in more detail with reference to the accompanying drawings. The examples of the present inventive concept may, however, be embodied in different forms and should not be construed as limited to the examples set forth herein. Like reference numerals may refer to like elements throughout the specification.

Hereinafter, a spark ignition engine according to an embodiment of the present inventive concept will be described in detail with reference to the accompanying drawings.

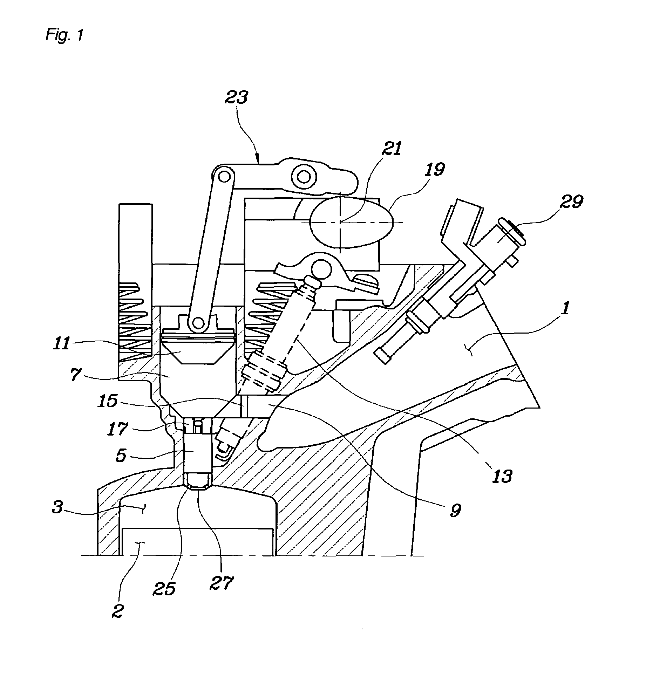

Referring to FIG. 1, a spark ignition engine according to an embodiment of the present inventive concept may include a main combustion chamber 3 formed so as to suction a mixture through an intake port 1, a pre-chamber 5 provided so as to communicate with the main combustion chamber 3, an auxiliary cylinder 7 provided so as to communicate with the main combustion chamber 3 via the pre-chamber 5, an auxiliary intake passage 9 connecting the auxiliary cylinder 7 and the intake port 1, an auxiliary piston 11 provided to slidably reciprocate in the auxiliary cylinder 7 so as to be able to suction the mixture from the intake port 1 via the auxiliary intake passage 9 and to discharge the mixture to the main combustion chamber 3 via the pre-chamber 5, and an spark plug 13 installed to ignite the mixture in the pre-chamber 5.

To cause combustion in the main combustion chamber 3 that substantially generates power, the mixture suctioned into the auxiliary cylinder 7 may be ignited in the pre-chamber 5. Flame nuclei ignited in the pre-chamber 5 may be injected into the mixture compressed in the main combustion chamber 3. Thereby, an ignition process may be caused to simultaneously take place at many points in the main combustion chamber 3, thereby improving the stability of mixture ignition so as to be able to sharply reduce a possibility of occurrence of misfire and knocking and to promote more stable combustion.

A first check valve 15 may be installed in the auxiliary intake passage 9 so as to allow the mixture to only flow from the intake port 1 toward the auxiliary cylinder 7. A second check valve 17 may be installed between the auxiliary cylinder 7 and the pre-chamber 5 so as to allow the mixture to only flow from the auxiliary cylinder 7 toward the pre-chamber 5.

Thus, when the auxiliary piston 11 is raised in the auxiliary cylinder 7, the mixture may be allowed to be suctioned from the intake port 1, past the auxiliary intake passage 9 and the first check valve 15, into the auxiliary cylinder 7. Here, the main combustion chamber 3 and the pre-chamber 5 may be kept closed off from the auxiliary cylinder 7 by the second check valve 17. When the auxiliary piston 11 is lowered, the first check valve 15 may be kept closed, and the second check valve 17 may be opened. Thus, the mixture in the auxiliary cylinder 7 may be directed toward the main combustion chamber 3 via the pre-chamber 5.

The auxiliary piston 11 may be connected with a link driving mechanism 23 that is configured to reciprocate the auxiliary piston 11 using mechanical displacement formed by a driving cam 19 installed on a camshaft 21 provided so as to open/close a valve of the main combustion chamber 3. Although a detailed structure of, for instance, a return spring is omitted, the link driving mechanism 23 may be realized in various methods using a link structure capable of promoting upward/downward movement of the auxiliary piston 11 by displacement generated according to a cam profile of the camshaft 21.

Further, to drive the auxiliary piston 11 independent of driving of the camshaft 21, a mechanism may be configured to cause the auxiliary piston 11 to be raised/lowered using a separate actuator (not separately shown).

A nozzle cap 27 having a plurality of injection holes 25 may be installed on a boundary between the pre-chamber 5 and the main combustion chamber 3 so as to be able to inject a flame from the pre-chamber 5 into the main combustion chamber 3 via the plurality of injection holes 25.

Thus, the mixture in the auxiliary cylinder 7 may be ignited by the spark plug 13 while passing through the pre-chamber 5 due to the downward movement of the auxiliary piston 11. When passing through the nozzle cap 27, the mixture may be dispersed into a plurality of flame nuclei in the main combustion chamber 3.

At least one injector 29 may be installed in the intake port 1 so as to be able to inject fuel to an upstream side of a portion where the auxiliary intake passage 9 communicates with the intake port 1.

For example, when only one injector 29 is installed in the intake port 1, the fuel-air ratio of the mixture suctioned into the auxiliary cylinder 7 may be configured to be different from the one of the mixture suctioned into the main combustion chamber 3 in a method such as multistage injection by distinguishing when the mixture is suctioned into the auxiliary cylinder 7 and when the mixture is mainly suctioned into the main combustion chamber 3 via an intake valve of the intake port 1 from each other. Also the fuel-air ratios of the mixtures of both the auxiliary cylinder 7 and the main combustion chamber 3 are equal to each other, when the injection is performed with a method such as single stage injection.

Further, when two injectors 29 are installed in the intake port 1, one of the two injectors 29 is designed to inject the fuel so as to form the mixture supplied to the auxiliary cylinder 7 via the auxiliary intake passage 9, and the other of the two injectors 29 is designed to inject the fuel so as to form the mixture supplied to the main combustion chamber 3 via the intake port 1. Thereby, the fuel-air ratios of the auxiliary cylinder 7 and the main combustion chamber 3 are formed in completely independent ways, so that a wider range of combustion control of the engine can be secured.

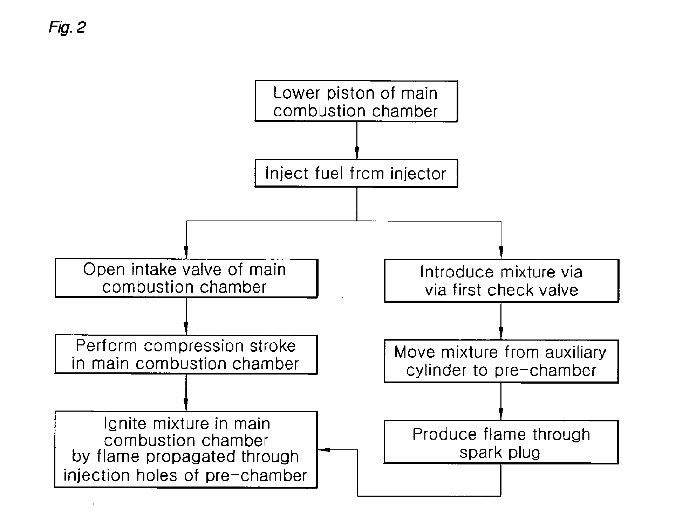

As shown in FIG. 2, an example of a method of controlling a spark ignition engine is described. The spark ignition engine may be configured as described above and illustrated in FIG. 1. The injector 29 may inject the fuel at a point of time when the fuel and air injected by the injector 29 can be suctioned to the auxiliary cylinder 7 via the auxiliary intake passage 9 while the auxiliary piston 11 is raised in the auxiliary cylinder 7.

In detail, in FIG. 2, when a main piston 2(not separately shown in FIG. 1) of the main combustion chamber 3 begins to be lowered, the injector 29 may be designed to inject the fuel. Thereby, the mixture can flow into the auxiliary cylinder 7 via the auxiliary intake passage 9, and simultaneously can be supplied to the main combustion chamber 3. Thus, the main piston may be lowered, and simultaneously the auxiliary piston 11 may be raised.

When the main piston of the main combustion chamber 3 is raised to perform a compression stroke, the spark plug 13 may be controlled, and the auxiliary piston 11 of the auxiliary cylinder 7 is lowered so as to move the mixture suctioned into the auxiliary cylinder 7 to the pre-chamber 5 and ignite the mixture moved to the pre-chamber 5 at nearly the same time. Ultimately, an ignited flame may be formed into a plurality of flame nuclei, and may be injected into the mixture compressed in the main combustion chamber 3.

Here, as described above, when only one injector 29 is installed in the intake port 1, the multistage injection may be allowed to be performed so that the fuel-air ratio of the mixture flowing into the auxiliary cylinder 7 via the auxiliary intake passage 9 can be adjusted. When two injectors are installed in the intake port, the injection can be controlled so as to independently determine amounts of fuel and air in the auxiliary cylinder 7 and the main combustion chamber 3, thereby determining a wide range of the fuel-air ratios.

Although specific embodiments of the present inventive concept have been described for illustrative purposes, those skilled in the art will appreciate that various modifications, additions and substitutions are possible, without departing from the scope of the inventive concept as defined in the appended claims and their equivalents.

## Claims

1. A spark ignition engine, comprising:
a main combustion chamber (3) configured to suction a mixture through an intake port (1);
a pre-chamber (5) configured to communicate with the main combustion chamber (3);
an auxiliary cylinder (7) configured to communicate with the main combustion chamber (3) via the pre-chamber (5);
an auxiliary intake passage (9) connecting the auxiliary cylinder (7) and the intake port (1);
an auxiliary piston (11) configured to slidably reciprocate in the auxiliary cylinder (7) such that the mixture is suctioned from the intake port (1) via the auxiliary intake passage (9) and the mixture is discharged to the main combustion chamber (3) via the pre-chamber (5); and
a spark plug (13) configured to ignite the mixture in the pre-chamber (5).

2. The spark ignition engine according to claim 1, further comprising:
a first check valve (15) disposed in the auxiliary intake passage (9) and configured to allow the mixture to only flow from the intake port (1) toward the auxiliary cylinder (7); and
a second check valve (17) disposed between the auxiliary cylinder (7) and the pre-chamber (5) and configured to allow the mixture to only flow from the auxiliary cylinder (7) toward the pre-chamber (5).

3. The spark ignition engine according to claim 2, wherein:
the auxiliary piston (11) is connected with a link driving mechanism (23),
the link driving mechanism (23) is configured to reciprocate the auxiliary piston (11) using mechanical displacement formed by a driving cam (19) disposed on a camshaft (21) such that a valve of the main combustion chamber (3) is opened/closed.

4. The spark ignition engine according to claim 2, further comprising a nozzle cap (27) having a plurality of injection holes (25) and disposed on a boundary between the pre-chamber (5) and the main combustion chamber (3), the nozzle cap (27) being configured to inject a flame from the pre-chamber (5) into the main combustion chamber (3) via the plurality of injection holes (25).

5. The spark ignition engine according to claim 2, further comprising at least one injector (29) disposed in the intake port (1) and configured to inject fuel to an upstream side of a portion where the auxiliary intake passage (9) communicates with the intake port (1).

6. The spark ignition engine according to claim 5, wherein:
two injectors are disposed in the intake port, and
one of the two injectors is configured to inject the fuel to form the mixture supplied to the auxiliary cylinder (7) via the auxiliary intake passage (9); whereas the other of the two injectors is configured to inject the fuel to form the mixture supplied to the main combustion chamber (3) via the intake port (1).

7. A method of controlling a spark ignition engine, the spark ignition engine comprising:
a main combustion chamber (3) configured to suction a mixture through an intake port (1);
a pre-chamber (5) configured to communicate with the main combustion chamber (3);
an auxiliary cylinder (7) configured to communicate with the main combustion chamber (3) via the pre-chamber (5);
an auxiliary intake passage (9) connecting the auxiliary cylinder (7) and the intake port (1);
an auxiliary piston (11) configured to slidably reciprocate in the auxiliary cylinder (7) such that the mixture is suctioned from the intake port (1) via the auxiliary intake passage (9) and the mixture is discharged to the main combustion chamber (3) via the pre-chamber (5);
a spark plug (13) configured to ignite the mixture in the pre-chamber (5); and
at least one injector (29) disposed in the intake port (1) and configured to inject fuel to an upstream side of a portion where the auxiliary intake passage (9) communicates with the intake port (1),
the method comprising:
injecting the fuel from the injector (29) at a point of time when the fuel and air injected by the injector (29) are suctioned to the auxiliary cylinder (7) via the auxiliary intake passage (9) while the auxiliary piston (11) is raised in the auxiliary cylinder (7);
lowering a main piston (2) of the main combustion chamber (3) so as to perform an intake stroke in which the mixture of fuel and air injected from the injector (29) is suctioned to the main combustion chamber (3);
when the main piston (2) of the main combustion chamber (3) is raised to perform a compression stroke, lowering the auxiliary piston (11) of the auxiliary cylinder (7) to move the mixture suctioned into the auxiliary cylinder (7) to the pre-chamber (5); and
controlling the spark plug (13) so as to ignite the mixture moved to the pre-chamber (5); and causing an ignited flame to be formed into a plurality of flame nuclei and to be injected into the mixture compressed in the main combustion chamber (3).

8. The method according to claim 7, wherein the injector (29) performs multistage injection so as to be able to adjust a fuel-air ratio of the mixture flowing into the auxiliary cylinder (7) via the auxiliary intake passage (9) and to adjust a fuel-air ratio of the mixture flowing into the main combustion chamber (3) via the intake port (1).

## Patentansprüche

1. Funkenzündungsmotor, aufweisend:
eine Hauptbrennkammer (3), die konfiguriert ist, um ein Gemisch durch einen Einlasskanal (1) hindurch anzusaugen;
eine Vorkammer (5), die konfiguriert ist, um mit der Hauptbrennkammer (3) in Verbindung zu stehen;
einen Hilfszylinder (7), der konfiguriert ist, um über die Vorkammer (5) mit der Hauptbrennkammer (3) in Verbindung zu stehen;
eine Hilfseinlasspassage (9), die den Hilfszylinder (7) und den Einlasskanal (1) verbindet;
einen Hilfskolben (11), der konfiguriert ist, um sich in dem Hilfszylinder (7) derart gleitend hin- und herzubewegen, dass das Gemisch von dem Einlasskanal (1) über die Hilfseinlasspassage (9) gesaugt wird, und das Gemisch über die Vorkammer (5) an die Hauptbrennkammer (3) abgeführt wird; und
eine Zündkerze (13), die konfiguriert ist, um das Gemisch in der Vorkammer (5) zu zünden.

2. Funkenzündungsmotor nach Anspruch 1, ferner aufweisend:
ein erstes Rückschlagventil (15), das in der Hilfseinlasspassage (9) angeordnet ist und konfiguriert ist, um zu ermöglichen, dass das Gemisch nur von dem Einlasskanal (1) in Richtung zu dem Hilfszylinder (7) strömt; und
ein zweites Rückschlagventil (17), das zwischen dem Hilfszylinder (7) und der Vorkammer (5) angeordnet ist und konfiguriert ist, um zu ermöglichen, dass das Gemisch nur von dem Hilfszylinder (7) in Richtung zu der Vorkammer (5) strömt.

3. Funkenzündungsmotor nach Anspruch 2, wobei:
der Hilfskolben (11) mit einem Gelenkantriebsmechanismus (23) verbunden ist,
der Gelenkantriebsmechanismus (23) konfiguriert ist, um den Hilfskolben (11) mittels mechanischer Verschiebung, die durch einen Antriebsnocken (19) gebildet wird, der an einer Nockenwelle (21) angeordnet ist, derart hin- und herzubewegen, dass ein Ventil der Hauptbrennkammer (3) geöffnet/geschlossen wird.

4. Funkenzündungsmotor nach Anspruch 2, ferner aufweisend eine Düsenkappe (27), die eine Mehrzahl von Einspritzöffnungen (25) aufweist und an einer Grenze zwischen der Vorkammer (5) und der Hauptbrennkammer (3) angeordnet ist, wobei die Düsenkappe (27) konfiguriert ist, um eine Flamme von der Vorkammer (5) über die Mehrzahl von Einspritzöffnungen (25) in die Hauptbrennkammer (3) zu injizieren.

5. Funkenzündungsmotor nach Anspruch 2, ferner aufweisend wenigstens eine Einspritzdüse (29), die in dem Einlasskanal (1) angeordnet ist und konfiguriert ist, um Kraftstoff zu einer Zustromseite eines Abschnitts einzuspritzen, wo die Hilfseinlasspassage (9) mit dem Einlasskanal (1) in Verbindung steht.

6. Funkenzündungsmotor nach Anspruch 5, wobei:
zwei Einspritzdüsen in dem Einlasskanal angeordnet sind, und
die eine der beiden Einspritzdüsen konfiguriert ist, um den Kraftstoff derart einzuspritzen, dass das Gemisch gebildet wird, das dem Hilfszylinder (7) über die Hilfseinlasspassage (9) zugeführt wird, wohingegen die andere der beiden Einspritzdüsen konfiguriert ist, um den Kraftstoff derart einzuspritzen, dass das Gemisch gebildet wird, das der Hauptbrennkammer (3) über den Einlasskanal (1) zugeführt wird.

7. Verfahren zur Steuerung eines Funkenzündungsmotors, wobei der Funkenzündungsmotor aufweist:
eine Hauptbrennkammer (3), die konfiguriert ist, um ein Gemisch durch einen Einlasskanal (1) hindurch anzusaugen;
eine Vorkammer (5), die konfiguriert ist, um mit der Hauptbrennkammer (3) in Verbindung zu stehen;
einen Hilfszylinder (7), der konfiguriert ist, um über die Vorkammer (5) mit der Hauptbrennkammer (3) in Verbindung zu stehen;
eine Hilfseinlasspassage (9), die den Hilfszylinder (7) und den Einlasskanal (1) verbindet;
einen Hilfskolben (11), der konfiguriert ist, um sich in dem Hilfszylinder (7) derart gleitend hin- und herzubewegen, dass das Gemisch von dem Einlasskanal (1) über die Hilfseinlasspassage (9) gesaugt wird, und das Gemisch über die Vorkammer (5) an die Hauptbrennkammer (3) abgeführt wird;
eine Zündkerze (13), die konfiguriert ist, um das Gemisch in der Vorkammer (5) zu zünden; und
wenigstens eine Einspritzdüse (29), die in dem Einlasskanal (1) angeordnet ist und konfiguriert ist, um Kraftstoff zu einer Zustromseite eines Abschnitts einzuspritzen, wo die Hilfseinlasspassage (9) mit dem Einlasskanal (1) in Verbindung steht,
wobei das Verfahren aufweist:
Einspritzen des Kraftstoffes von der Einspritzdüse (29) zu einem Zeitpunkt, wenn der von der Einspritzdüse (29) eingespritzte Kraftstoff und Luft über die Hilfseinlasspassage (9) zu dem Hilfszylinder (7) angesaugt werden, während der Hilfskolben (11) in dem Hilfszylinder (7) angehoben wird;
Absenken eines Hauptkolbens (2) der Hauptbrennkammer (3) derart, dass ein Ansaughub durchgeführt wird, bei welchem das Gemisch aus von der Einspritzdüse (29) eingespritztem Kraftstoff und Luft zu der Hauptbrennkammer (3) angesaugt wird;
wenn der Hauptkolben (2) der Hauptbrennkammer (3) angehoben wird, um einen Kompressionshub durchzuführen, Absenken des Hilfskolbens (11) des Hilfszylinders (7), um das in den Hilfszylinder (7) gesaugte Gemisch zu der Vorkammer (5) zu bewegen; und
Steuern der Zündkerze (13) derart, dass das zu der Vorkammer (5) bewegte Gemisch gezündet wird, und Herbeiführen, dass eine Zündflamme zu einer Mehrzahl von Flammenkernen gebildet wird und in das in der Hauptbrennkammer (3) komprimierte Gemisch injiziert wird.

8. Verfahren nach Anspruch 7, wobei die Einspritzdüse (29) eine mehrstufige Einspritzung derart durchführt, dass sie geeignet ist, ein Kraftstoff-Luft-Verhältnis des über die Hilfseinlasspassage (9) in den Hilfszylinder (7) strömenden Gemisches einzustellen und ein Kraftstoff-Luft-Verhältnis des über den Einlasskanal (1) in die Hauptbrennkammer (3) strömenden Gemisches einzustellen.

## Revendications

1. Moteur à allumage par étincelles, comprenant :
une chambre de combustion principale (3) configurée de façon à aspirer un mélange à travers un orifice d'admission (1) ;
une préchambre (5) configurée de façon à communiquer avec la chambre de combustion principale (3) ;
un cylindre auxiliaire (7) configuré de façon à communiquer avec la chambre de combustion principale (3) par l'intermédiaire de la préchambre (5) ;
un passage d'admission auxiliaire (9) qui connecte le cylindre auxiliaire (7) et l'orifice d'admission (1) ;
un piston auxiliaire (11) configuré de façon à être animé d'un mouvement de va-et-vient de manière coulissante dans le cylindre auxiliaire (7) de telle sorte que le mélange soit aspiré à partir de l'orifice d'admission (1) par l'intermédiaire du passage d'admission auxiliaire (9), et que le mélange soit évacué vers la chambre de combustion principale (3) par l'intermédiaire de la préchambre (5) ; et
une bougie d'allumage (13) configurée de façon à enflammer le mélange dans la préchambre (5).

2. Moteur à allumage par étincelles selon la revendication 1, comprenant en outre :
un premièr clapet de non retour (15) disposé dans le passage d'admission auxiliaire (9), et configuré de façon à permettre au mélange de ne s'écouler qu'à partir de l'orifice d'admission (1) vers le cylindre auxiliaire (7) ; et
un second clapet de non retour (17) disposé entre le cylindre auxiliaire (7) et la préchambre (5), et configuré de façon à permettre au mélange de ne s'écouler qu'à partir du cylindre auxiliaire (7) vers la préchambre (5).

3. Moteur à allumage par étincelles selon la revendication 2, dans lequel :
le piston auxiliaire (11) est connecté à un mécanisme d'entraînement à biellette (23) ;
le mécanisme d'entraînement à biellette (23) est configuré de façon à animer le piston auxiliaire (11) d'un mouvement de va-et-vient en utilisant un déplacement mécanique constitué par une came d'entraînement (19) disposée sur un arbre à cames (21) de telle sorte qu'une soupape de la chambre de combustion principale (3) soit ouverte / fermée.

4. Moteur à allumage par étincelles selon la revendication 2, comprenant en outre un chapeau de buse (27) qui présente une pluralité de trous d'injection (25), et qui est disposé sur une frontière entre la préchambre (5) et la chambre de combustion principale (3), le chapeau de buse (27) étant configuré de façon à injecter une flamme à partir de la préchambre (5) dans la chambre de combustion principale (3) par l'intermédiaire de la pluralité de trous d'injection (25).

5. Moteur à allumage par étincelles selon la revendication 2, comprenant en outre au moins un injecteur (29) disposé dans l'orifice d'admission (1) et configuré de façon à injecter un carburant vers un côté amont d'une partie où le passage d'admission auxiliaire (9) communique avec l'orifice d'admission (1).

6. Moteur à allumage par étincelles selon la revendication 5, dans lequel :
deux injecteurs sont disposés dans l'orifice d'admission ; et
l'un des deux injecteurs est configuré de façon à injecter le carburant de manière à former le mélange fourni au cylindre auxiliaire (7) par l'intermédiaire du passage d'admission auxiliaire (9), tandis que l'autre des deux injecteurs est configuré de façon à injecter le carburant de manière à former le mélange fourni à la chambre de combustion principale (3) par l'intermédiaire de l'orifice d'admission (1).

7. Procédé destiné à commander un moteur à allumage par étincelles, le moteur à allumage par étincelles comprenant :
une chambre de combustion principale (3) configurée de façon à aspirer un mélange à travers un orifice d'admission (1) ;
une préchambre (5) configurée de façon à communiquer avec la chambre de combustion principale (3) ;
un cylindre auxiliaire (7) configuré de façon à communiquer avec la chambre de combustion principale (3) par l'intermédiaire de la préchambre (5) ;
un passage d'admission auxiliaire (9) qui connecte le cylindre auxiliaire (7) et l'orifice d'admission (1) ;
un piston auxiliaire (11) configuré de façon à être animé d'un mouvement de va-et-vient de manière coulissante dans le cylindre auxiliaire (7) de telle sorte que le mélange soit aspiré à partir de l'orifice d'admission (1) par l'intermédiaire du passage d'admission auxiliaire (9), et que le mélange soit évacué vers la chambre de combustion principale (3) par l'intermédiaire de la préchambre (5) ;
une bougie d'allumage (13) configurée de façon à enflammer le mélange dans la préchambre (5) ; et
au moins un injecteur (29) disposé dans l'orifice d'admission (1) et configuré de façon à injecter un carburant vers un côté amont d'une partie où le passage d'admission auxiliaire (9) communique avec l'orifice d'admission (1) ;
le procédé comprenant les étapes consistant à :
injecter le carburant à partir de l'injecteur (29) à un moment où le carburant et l'air injectés par l'injecteur (29) sont aspirés vers le cylindre auxiliaire (7) par l'intermédiaire du passage d'admission auxiliaire (9) tandis que le piston auxiliaire (11) s'élève dans le cylindre auxiliaire (7) ;
abaisser un piston principal (2) de la chambre de combustion principale (3) de façon à exécuter une course d'admission dans laquelle le mélange de carburant et d'air injecté à partir de l'injecteur (29) est aspiré vers la chambre de combustion principale (3) ;
lorsque le piston principal (2) de la chambre de combustion principale (3) s'élève de façon à exécuter une course de compression, abaisser le piston auxiliaire (11) du cylindre auxiliaire (7) de manière à déplacer le mélange aspiré dans le cylindre auxiliaire (7) vers la préchambre (5) ; et
commander la bougie d'allumage (13) de façon à enflammer le mélange déplacé vers la préchambre (5), et faire en sorte qu'une flamme soit constituée d'une pluralité de noyaux de flamme, et soit injectée dans le mélange comprimé dans la chambre de combustion principale (3).

8. Procédé selon la revendication 7, dans lequel l'injecteur (29) exécute une injection échelonnée de façon à pouvoir régler le rapport carburant - air du mélange qui circule dans le cylindre auxiliaire (7) par l'intermédiaire du passage d'admission auxiliaire (9), et à pouvoir régler le rapport carburant - air du mélange qui circule dans la chambre de combustion principale (3) par l'intermédiaire de l'orifice d'admission (1).
